# Europäisches Patentamt

## European Patent Office

## Office européen des brevets

(11) Publication number: **0 218 608**
**B1**

# EUROPEAN PATENT SPECIFICATION

(45) Date of publication of patent specification: **29.08.90**

(21) Application number: **86901754.1**

(22) Date of filing: **13.03.86**

(86) International application number:
**PCT/AU86/00070**

(87) International publication number:
**WO 86/05510 25.09.86 Gazette 86/21**

(51) Int. Cl.⁵: **C 11 D 1/72, C 11 D 1/722,
C 11 D 1/831, A 01 N 59/12,
C 02 F 1/50**

(54) **LOW-FOAMING COMPOSITIONS.**

(30) Priority: **13.03.85 AU 9675/85**
**13.03.85 AU 9676/85**

(43) Date of publication of application:
**22.04.87 Bulletin 87/17**

(45) Publication of the grant of the patent:
**29.08.90 Bulletin 90/35**

(84) Designated Contracting States:
**AT BE CH DE FR GB IT LI LU NL SE**

(56) References cited:
**AU-B-5 842 869          DE-A-1 113 279
CH-A- 476 100          DE-A-2 529 096
CH-A- 493 623          US-A-4 288 428
DE-A-1 106 907**

**L. OSIPOW:"Surface Chemistry", 1963, Reinhold
Publishing Corporation, pages 221 to 223**

The file contains technical information
submitted after the application was filed and
not included in this specification

(73) Proprietor: **GLUCK, Bruno Anthony
20 King Avenue
Balgowlah, NSW 2093 (AU)**

(72) Inventor: **GLUCK, Bruno Anthony
20 King Avenue
Balgowlah, NSW 2093 (AU)**

(74) Representative: **Wilkinson, Stephen John et al
c/o Stevens, Hewlett & Perkins 5 Quality Court
Chancery Lane
London WC2A 1HZ (GB)**

Courier Press, Leamington Spa, England.

## Description

The present invention relates to detergent and detergent-sanitiser compositions suitable for high pressure, clean-in-place and closed circuit cleaning procedures for use in the dairy and in soft drink and other food processing equipment.

The detergent sanitiser compositions of the invention are useful in the treatment of bulk volumes of water such as public water supplies, swimming pools, holding tanks and the like.

Until the present invention it has been difficult to provide suitable detergent and detergent-sanitiser compositions with the desired low foam characteristics for such purposes.

CH—A—493623 describes a low-foaming stain-removing composition for textiles. The composition comprises a mixture of a water-soluble ethoxylated and propoxylated long chain aliphatic alcohol, a water-insoluble ethoxylated long chain aliphatic alcohol, a hydrotrope, an organic solvent and, optionally, water. According to this reference, the hydrotrope is included in the composition to improve the clear solubility and viscosity behaviour at low temperatures. AU—B—58428/69 describes low foam detergent compositions consisting of a mixture of a non-ionic surface active agent having a cloud point above 45°C, a non-ionic surface active agent having a cloud point below 35°C, a defoamer component selected from aliphatic monocarboxylic acids and aliphatic alcohols wherein the aliphatic radical contains 8 to 18 carbon atoms and, in the case where the defoamer component is an aliphatic monocarboxylic acid, an amount of a mineral acid. According to this reference, a strong defoamer component is used to reduce the amount of foam that would be generated by high foaming surface active agent used.

Although many propositions have been made for low foaming detergent compositions which usually were a combination of a non-ionic surface active agent with a foam depressant, there is still a need for such low foaming detergent compositions, especially when the detergent solutions are used at elevated temperatures. Some cleaning and cleaning-sanitising operations can be carried out satisfactorily with cold water at ambient temperatures, it is often preferred to work at higher operating temperatures.

Thus, while some detergent compositions based on non-ionic surfactants are often preheated to operating temperatures above 35°C, they will generate only little foam in the upper range of their temperature, but on cooling down, which takes place rapidly during the cleaning operation, the foam generation will gradually increase even in the presence of defoaming agents.

The availability of detergent compositions of low foam characteristics at ambient temperatures is of greatest importance for special purpose detergent-sanitiser compositions incorporating iodine as its complex with a non-ionic surfactant, known as an iodophor.

It is generally recognised that iodine has distinct advantages over chlorine for water treatment, which today is either used by itself or in the form of chlorine generating substances, as the most widely used water disinfectant.

Not only is iodine considerably more effective against most pathogenic organisms, and therefore can be used at lower concentrations than chlorine, but iodine does not impart disagreeable odour or taste to the water. This makes it eminently suitable for potable water and for use in swimming pools. Added advantages of using iodine in the treatment of swimming pool water are that it eliminates the inconvenience of regular pH control, and that unlike chlorine and bromine it does not react with ammonia, amines or like compounds such as urea to form compounds responsible for irritation of the eyes and mucous membranes, associated with chlorinated swimming pool water. Furthermore, the level of iodine concentration in the water is less liable to reduction by pollution.

The importance of iodine for the treatment of municipal water and swimming pools has been recognised by the American Public Health Association, which has set a minimum of 0.2 ppm of iodine for disinfection.

The efficiency of iodine in water disinfection, especially in emergency conditions, is illustrated by the fact that highly contaminated water with a bacterial count of $10^6$ organisms per ml is reduced within 10 minutes at 25°C to drinking water quality of 10 organisms per 100 ml by the addition of 3.0 to 4.0 pm iodine.

As iodophors were known to have inherant foaming properties and were thus unsuitable for water treatment, many proposals have been made to provide suitable water treatment methods using iodine, other than as an iodophor as the disinfecting agent. If chlorine has so far maintained its predominant position in the treatment of water for domestic, public and industrial waters, it is only due to the technical difficulties and high costs which have prevented up to date the general use of iodine based water disinfectants.

## Description of the invention

The present invention relates to detergent and detergent-sanitizing compositions and to water treatment compositions which maintain low-foaming characteristics over a wide range of operating temperatures at which cleaning and cleaning-sanitising operations and water treating processes are performed.

The low-foaming detergent and detergent-sanitising compositions of the invention are suitable for use at ambient temperatures and for treatment bulk volumes of water.

Low foaming detergent compositions of the invention which may incorporate an iodophor are suitable for pressure clean-in-place and closed circuit cleaning at ambient temperatures encountered under normal climatic conditions.

The present invention provides a low foaming composition comprising a first non-ionic surface active agent selected from ethylene oxide condensates with alkyl or dialkylphenol and ethylene oxide-propylene oxide condensates which first non-ionic surface active agent has a cloud point of less than 40°C in a 1% aqueous solution and, optionally, a solvent for the non-ionic surface active agent, characterized in that the composition further contains a hydrotrope.

It is advantageous but not essentially required to add an additional nonionic surface active agent having a lower hydrophilic-lipophilic balance. Usually, the second surface active agent will be employed in a lesser amount than the first surface active agent.

Either surface active agent may contain up to 30% by weight of iodine in the form of an iodophor. Usually, the first surface agent will contain the iodine.

It was surprisingly found that low foaming nonionic surface active agents having a cloud point in a 1.0% aqueous solution of below 40°C when solubilised by a hydrotrope or a co-solvent or a mixture of both retain their low-foaming characteristics over a wide range of temperatures when preheated solutions are then cooled and can also be used at ambient cold water temperatures.

It has further been found that the solubilising effect of the hydrotrope is not restricted to nonionic surface active agents, but also to complexes formed between nonionic surface active agents, and iodine without any loss of antibacterial activity. Such complexes are known as iodophors.

In some cases the hydrotropes will cause the formation of stable dispersions at operating temperatures. However, these dispersions retain their cleaning properties, and where they incorporate iodine, also their disinfecting properties.

There are many ways known and duly described as to how the complex formation of the iodine with the surface active agent is achieved. However, the simplest and most practical way is by dissolving the iodine directly in an excess of the surface active agent or mixing iodine with the surface active agent separately to an available iodine content up to about 30% by weight based on the combined weight. For use for water treatment an available iodine content of about 5% to about 15% is preferred.

If the iodophor is not directly made with the nonionic surface active agent used in the composition, it is added.

In the case of a detergent-sanitizer which contains an iodophor, it is preferred that an acid, such as phosphoric acid, hydrochloric acid, sulfuric acid, sulfamic acid, preferably phosphoric acid or sulfamic acid or a mixture thereof, is added to give the use dilution a pH below about 5 preferably between about 1.5 and about 5, and more preferably between about 3 and about 5.

The amount of iodophor is calculated so that the final detergent sanitizing composition has an available iodine content between about 0.2 and 3.0%. For water treatment compositions can contain up to 30% w/v available iodine.

The compositions of the invention also find use in treatment of bulk volumes of water. Accordingly, the invention also provides a method for water disinfection which comprises adding an effective amount of a composition of the invention which contains iodine to the water to be treated so as to achieve an iodine content of from about 0.1 ppm to about 10 ppm.

Conventional iodophors are not suitable as their use would result in unacceptable foaming in use in municipal water treatment, swimming pools, air conditioning cooling water and the like.

For the treatment of highly contaminated water for drinking purposes, an iodine level of about 4.0 ppm to about 8.0 ppm might be necessary, whereas about 0.2 ppm to about 0.4 ppm is usually sufficient to keep the water in swimming pools at a satisfactory quality.

The preferred surface active agents are those derived from alkyl- or dialkyl-phenols having 5 to 7 ethoxy groups per molecule or the ethylene oxide copolymers with propylene oxide. The surface active agent can be used alone or in combination with other suitable nonionic surface active agents having similar cloud point characteristics.

Other suitable nonionic surface active agents are those selected from copolymers of ethylene oxide with propylene oxide or the ethylene oxide condensates with alkyl or dialkylphenols, fatty acid alcohols or acids.

Suitable hydrotropes are, for example, the water soluble salts of toluene sulfonates, xylene sulfonates, cumene sulfonates or naphthalene sulfonates, preferably cumene sulfonates.

Suitable as co-solvents are lower alcohols such as methanol, ethanol, propanol or isopropanol, or propylene glycol or a polyethylene glycol. Propylene glycol is the co-solvent of preference.

The amount of hydrotrope or co-solvent to be added is established by stirring the nonionic surface active agents with the iodophor, if present, in approximately three quarters of the final volume of water, at the lowest temperature at which the detergent composition is expected to operate, and adding sufficient hydrotrope or co-solvent until a clear solution or stable suspension is obtained.

Modes for carrying out the invention

The following examples illustrate preferred embodiments of the present invention. They should not be construed as binding to the claims hereto. Unless otherwise indicated, the ingredients are combined by standard cold mixing processes.

3

Example 1
Low foaming detergent for clean-in-place cleaning

|  | Parts by weight |
|---|---|
| Nonyl phenol ethoxylate (6 mole ethoxy) | 70.0 |
| Sodium xylene sulfonate 40% solution | 40.0 |
| Sodium metasilicate | 50.0 |
| Sodium tripolyphosphate | 30.0 |
| Water, to make | 1000.0 mL |

Example 2
Low foaming detergent for closed circuit cleaning of soft drink and similar filling equipment

|  | Parts by weight |
|---|---|
| Copolymer of ethylene oxide with propylene oxide* | 40.0 |
| Sodium salt of cumene sulfonate 40% | 150.0 |
| Tetrapotassium polyphosphate | 100.0 |
| Disodium ethylene diaminetetraacetate | 20.0 |
| Water to make | 1000.0 mL |

*(Teric PE 61, available from I.C.I. Ltd. UK or Plurionic L 61 from Wyandotte Chemical Corp. USA).

Example 3
Detergent—sanitizer for the dairy industry

|  | Parts by weight |
|---|---|
| Nonyl phenol ethoxylate (7 mol ethoxy) | 21.0 |
| Nonyl phenol ethoxylate (5 mol ethoxy) | 1.5 |
| Iodine | 1.9 |
| Sodium cumene sulfonate | 35.0 |
| Phosphoric acid 85% | 160.0 |
| Water, to make | 1000.0 mL |

The iodine was dissolved by stirring it in the excess of the nonyl phenol ethoxylate (7 mol ethoxy), to complex the iodine, at a temperature between 45° to 60°C until all iodine has gone into solution whereupon the rest of the nonyl phenol ethoxylate was added. The resulting mixture was cooled to ambient temperature and added with light agitation to the mixture of the sodium cumene sulfonate, phosphoric acid and water until a homogeneous solution was obtained.

The detergent sanitizer concentrate thus obtained has an available iodine content of approximately 1.75% and is to be diluted according to application to an available iodine content from 175 ppm to 25 ppm.

Example 4
Low foam powder detergent sanitizer for the food industry

|  | Parts by weight |
|---|---|
| Nonyl phenol ethoxylate (7 mol ethoxy) | 14.5 |
| Iodine | 1.2 |
| Potassium xylene sulfonate (solid) | 16.0 |
| Sulfamic acid | 9.0 |
| Sodium bisulfate (anhydrous) | 5.0 |
| Urea | 54.3 |

The iodine was dissolved in a normal manner into nonionic surface active agent. The dark paste obtained was mixed with the rest of the dry ingredients to produce, after grinding, a free flowing powder easily dispersable in water containing approximate 1% w/w available iodine. On dilution to a use concentration in water of 25 to 75 ppm a light yellowish/brown, slightly hazy solution was obtained.

Example 5
Water treatment composition
11.0 kg of finely powdered iodine was added to 50.0 kg of nonylphenolethoxylate (6 mol ethoxy) and

4

2.0 kg propylene glycol at a temperature of about 40°C. The mixture was gently stirred until the iodine dissolved. The resulting solution was cooled to ambient temperature and added to 36.0 kg of a 40% solution of sodium comeno sulfonate and 1.0 kg of 75% phosphoric acid with sufficient mixing until an even homogeneous fluid was obtained.

Example 6
Water treatment
To a swimming pool containing 50 m$^3$ of water 200 mL of a composition, as described in the following example, was added slowly and with simultaneous stirring to approx. 10.0 L of water in a bucket. The resulting turbid solution was then added in small portions to various parts of the swimming pool. A level of 0.2 ppm was maintained daily, additions to the swimming pool of half the quantity of the composition (100 mL) in the manner described.

**Claims**

1. A low foaming composition comprising a first nonionic surface active agent selected from ethylene oxide condensates with alkyl or dialkylphenol and ethylene oxide-propylene oxide condensates which first nonionic surface active agent has a cloud point of less than 40°C in a 1% aqueous solution and, optionally, a solvent for the nonionic surface active agent, characterized in that the composition further contains a hydrotrope.

2. A composition according to claim 1, wherein the first nonionic surface active agent is an ethylene oxide condensate with an alkyl or dialkylphenol having from 5 to 7 ethoxy groups in the molecule.

3. A composition according to either claim 1 or claim 2, wherein the hydrotrope is a water-soluble salt of toluene sulfonate, xylene sulfonate, cumene sulfonate or naphthalene sulfonate.

4. A composition according to claim 3, wherein the hydrotrope is cumene sulfonate.

5. A composition according to any one of claims 1 to 4, wherein the solvent is a lower alcohol, propylene glycol or polyethylene glycol.

6. A composition according to claim 5, wherein the solvent is propylene glycol.

7. A composition according to any one of claims 1 to 6, which further contains a second nonionic surface active agent having a cloud point of less than 40°C in a 1% aqueous solution and having a lower hydrophilic-lipophilic balance than the first nonionic surface active agent.

8. A composition according to claim 7, wherein the second nonionic surface active agent is an ethylene oxide condensate with an alkyl or dialkylphenol, a fatty acid alcohol or acid, or a copolymer of ethylene oxide and propylene oxide.

9. A composition according to claim 8, wherein the second nonionic surface active agent is an ethylene oxide condensate with an alkyl or dialkylphenol having from 5 to 7 ethoxy groups per molecule.

10. A composition according to any one of claims 1 to 9, wherein the first nonionic surface active agent contains up to 30% by weight of available iodine in the form of an iodophor.

11. A composition according to any one of claims 7 to 9, wherein the second nonionic surface active agent contains up to 30% by weight of available iodine in the form of an iodophor.

12. A composition according to either claim 10 or claim 11, further comprising sufficient acid such that the composition, at use dilution, has a pH of less than about 5.

13. A composition according to claim 12, wherein the pH is in the range of from 1.5 to 5.

14. A composition according to claim 13, wherein the pH is in the range of from 3 to 5.

15. A composition according to any one of claims 12 to 14, wherein said acid is phosphoric acid, sulfamic acid, sulfuric acid, hydrochloric acid or a mixture of two or more thereof.

16. A composition according to claim 15, wherein the acid is phosphoric acid, sulfamic acid or a mixture thereof.

17. A method of treating water which comprises adding to said water sufficient of a composition according to claims 10 to 16 to achieve a concentration of available iodine of from 0.1 ppm to 10 ppm.

**Patentansprüche**

1. Niedrig schäumende Zusammensetzung, welche ein erstes nicht-ionisches oberflächenaktives Agens, gewählt aus Ethylenoxidkondensaten mit Alkyl oder Dialkylphenol und Ethylenoxid-Propylenoxidkondensaten, welches Agens in einer 1% wäßrigen Lösung einen Trübungspunkt von weniger als 40°C aufweist, und gegebenenfalls ein Lösungsmittel für das nicht-ionische oberflächenaktive Agens enthält, dadurch gekennzeichnet, daß die Zusammensetzung zusätzlich ein Hydrotrop enthält.

2. Zusammensetzung nach Anspruch 1, worin das erste nicht-ionische oberflächenaktive Agens ein Ethylenoxidkondensat mit einem Alkyl oder Dialkylphenol ist, welches 5 bis 7 Ethoxygruppen im Molekül aufweist.

3. Zusammensetzung nach Anspruch 1 oder 2, worin das Hydrotrop ein wasserlösliches Salz von Toluolsulfonat, Xylolsulfonat, Cumolsulfonat oder Naphthalinsulfonat ist.

4. Zusammensetzung nach Anspruch 3, worin das Hydrotrop Cumolsulfonat ist.

5. Zusammensetzung nach einem der Ansprüche 1 bis 4, worin das Lösungsmittel ein niedriger Alkohol, Propylenglykol oder Polyethylenglykol ist.

6. Zusammensetzung nach Anspruch 5, worin das Lösungsmittel Propylenglykol ist.

7. Zusammensetzung nach einem der Ansprüche 1 bis 6, welche weiters ein zweites nicht-ionisches oberflächenaktives Agens enthält, welches in einer 1% wäßrigen Lösung einen Trübungspunkt von weniger als 40°C aufweist, und welches ein niedrigeres hydrophil/lipophil Verhältnis als das erste nicht-ionische oberflächenaktive Agens besitzt.

8. Zusammensetzung nach Anspruch 7, worin das zweite nicht-ionische oberflächenaktive Agens ein Ethylenoxidkondensat mit einem Alkyl oder Dialkylphenol, einem Fettsäurealkohol oder einer Fettsäure oder einem Copolymer aus Ethylenoxid und Propylenoxid ist.

9. Zusammensetzung nach Anspruch 8, worin das zweite nicht-ionische oberflächenaktive Agens ein Ethylenoxidkondensat mit einem Alkyl oder Dialkylphenol ist, welches 5 bis 7 Ethoxygruppen pro Molekül aufweist.

10. Zusammensetzung nach einem der Ansprüche 1 bis 9, worin das erste nicht-ionische oberflächenaktive Agens bis zu 30% des verfügbaren Iods in Form eines Iodophors enthält.

11. Zusammensetzung nach einem der Ansprüche 7 bis 9, worin das zweite nicht-ionische oberflächenaktive Agens bis zu 30% des verfügbaren Iods in Form eines Iodophors enthält.

12. Zusammensetzung nach Anspruch 10 oder 11, welche weiters eine ausreichende Menge Säure enthält, damit die Zusammensetzung in der für die Verwendung geeigneten Verdünnung einen pH-Wert von weniger als 5 besitzt.

13. Zusammensetzung nach Anspruch 12, worin der pH-Wert im Bereich von 1,5 bis 5 liegt.

14. Zusammensetzung nach Anspruch 13, worin der pH-Wert im Bereich von 3 bis 5 liegt.

15. Zusammensetzung nach einem der Ansprüche 12 bis 14, worin die Säure Phosphorsäure, Sulfamsäure, Schwefelsäure, Chlorwasserstoffsäure oder eine Mischung von zwei oder mehreren davon ist.

16. Zusammensetzung nach Anspruch 5, worin die Säure Phosphorsäure, Sulfamsäure oder eine Mischung davon ist.

17. Verfahren zur Behandlung von Wasser, welches den Zusatz einer ausreichenden Menge der Zusammensetzung nach den Ansprüchen 10 bis 16 zu dem Wasser umfaßt, um eine Konzentration an verfügbaren Iod im Bereich von 0,1 ppm bis 10 ppm zu erreichen.

## Revendications

1. Composition à bas moussage, qui comprend un premier agent tensioactif, non-ionique, choisi parmi les condensats de l'oxyde d'éthylène avec un alkyl- ou dialkyl-phénol et les condensats oxyde d'éthylène-oxyde de propylène, ce premier agent tensioactif, non-ionique, présentant un point de turbidité inférieur à 40°C dans une solution aqueuse à 1%, et, éventuellement, un solvant pour l'agent tensioactif non ionique, caractérisée en ce que la composition contient en outre un hydrotrope.

2. Composition suivant la revendication 1, dans laquelle le premier agent tensioactif, non ionique, est un condensat de l'oxyde d'éthylène avec un alkyl- ou dialkyl-phénol ayant de 5 à 7 groupes éthoxy dans la molécule.

3. Composition suivant la revendication 1 ou 2, dans laquelle l'hydrotrope est un sel soluble dans l'eau de toluène-sulfonate, xylène-sulfonate, cumène-sulfonate ou naphtalène-sulfonate.

4. Composition suivant la revendication 3, dans laquelle l'hydrotrope est le cumène sulfonate.

5. Composition suivant une des revendications 1 à 4, dans laquelle le solvant est un alcool inférieur, propylène-glycol ou polyéthylène glycol.

6. Composition suivant la revendication 5, dans laquelle le solvant est le propylène glycol.

7. Composition suivant une des revendications 1 à 6, qui contient en outre un second agent tensioactif, non ionique, ayant un point de turbidité inférieur à 40°C en solution aqueuse à 1% et présentant une balance hydrophile-lipophile plus basse que le premier agent tensioactif, non ionique.

8. Composition suivant la revendication 7, dans laquelle le second agent tensioactif, non ionique, est un condensat de l'oxyde d'éthylène avec un alkyl- ou dialkyl-phénol, un alcool ou acide gras, ou un copolymère de l'oxyde d'éthylène avec de l'oxyde de propylène.

9. Composition suivant la revendication 8, dans laquelle le second agent tensioactif, non-ionique, est un condensat de l'oxyde d'éthylène avec un alkyl- ou dialkyl-phénol, ayant de 5 à 7 groupes éthoxy par molécule. —

10. Composition suivant une des revendications 1 à 9, dans laquelle le premier agent tensioactif, non ionique, contient jusqu'à 30% en poids d'iode disponible sous la forme d'un iodophor.

11. Composition suivant une des revendications 7 à 9, dans laquelle le second agent tensioactif, non ionique, contient jusqu'à 30% en poids d'iode disponible sous la forme d'un iodophor.

12. Composition suivant la revendication 10 ou 11, comprenant en outre suffisamment d'acide pour qu'à la dilution d'utilisation la composition ait un pH inférieur à environ 5.

13. Composition suivant la revendication 12, dont le pH est dans la marge de 1,5 à 5.

14. Composition suivant la revendication 13, dont le pH est dans la marge de 3 à 5.

15. Composition suivant une des revendications 12 à 14, dans laquelle ledit acide est l'acide

**EP 0 218 608 B1**

phosphorique, acide sulfamique, acide sulfurique, acide chlorhydrique ou un mélange de deux ou plusieurs d'entre eux.

16. Composition suivant la revendication 15, dans laquelle l'acide est l'acide phosphorique, acide sulfamique ou un mélange des deux.

17. Un procédé pour le traitement de l'eau, qui comprend l'addition à l'eau de suffisamment de la composition suivant les revendications 10 à 16 pour obtenir une concentration en iode disponible de 0,1 à 10 ppm.